# EUROPÄISCHE PATENTSCHRIFT

(11) **EP 2 405 567 B1**
(45) Veröffentlichungstag und Bekanntmachung des Hinweises auf die Patenterteilung: **23.10.2013**
(21) Anmeldenummer: 11172564.4
(22) Anmeldetag: 04.07.2011
(51) Int. Cl.: H02P 1/42, H02P 1/44, H02P 25/04

(54) **Schaltung zum Betrieb eines Hubwerks**
Switch for operating a hoisting gear
Commutation destinée au fonctionnement d'un dispositif de levage

(30) Priorität: 09.07.2010 CH 11182010
(43) Veröffentlichungstag der Anmeldung: 11.01.2012
(73) Patentinhaber: Müller Martini Holding AG, 6052 Hergiswil (CH)
(72) Erfinder: Holliger, Werner, 4802 Strengelbach (CH); Muri, Ivan, 6247 Schötz (CH)

(56) Entgegenhaltungen:
- EP-A2- 0 575 045
- DE-A1- 1 810 885
- US-A1- 2007 057 647

## Beschreibung

### Technisches Gebiet

Die Erfindung betrifft eine Schaltung zum Betrieb eines Hubwerks gemäss Oberbegriff des Anspruchs 1.

### Stand der Technik

Hubwerke mit einphasigen Elektromotoren sind seit langem bekannt. Sie werden beispielsweise in Werkstätten zum Umschlag von Waren mit vergleichsweise geringem Gewicht verwendet. Sie kommen vor allem dort zum Einsatz, wo nur Einphasennetze vorhanden sind und somit die an sich vorteilhafteren Hubwerke mit dreiphasigen Motoren, auch Dreiphasenhubwerk genannt, nicht verwendet werden können. Dies ist weiterhin in verschiedenen Ländern der Fall.

Bei einfachen Hubwerken wird in der Regel ein Anlaufkondensator verwendet, der in der Startphase eine Phasenverschiebung simuliert, die dem Motor ein erhöhtes Anlaufmoment zur Verfügung stellt. Nach dem Anfahren muss der Anlaufkondensator dann weggeschaltet werden. Bekannte Einphasenhubwerke verwenden hierzu einen Fliehkraftschalter.

Es hat sich jedoch herausgestellt, dass die Lebensdauer des Fliehkraftschalters in einem solchen Einphasenhubwerk auf Grund der grossen Ströme, die vom Fliehkraftschalter geschaltet werden müssen, wesentlich kürzer ausfällt als die Lebensdauer üblicher Einphasenhubwerke.

Die Fliehkraftschalter müssen deshalb, auch unter prophylaktischen Aspekten, vergleichsweise häufig ausgewechselt werden. Im Betrieb können sich die Kontakte eines Fliehkraftschalters verschweissen, was in der Folge leicht zu einer Überlastung oder sogar Zerstörung des dort eingesetzten Kondensators führen kann.

Bekannt ist auch die Verwendung von einstellbaren Zeitschaltrelais, welche in der Startphase nach einer bestimmten Zeitdauer von beispielsweise 0,5 Sekunden den Anlaufkondensator wegschalten. Solche Zeitrelais besitzen jedoch ähnliche Nachteile wie Fliehkraftschalter und müssen somit ebenfalls häufig ausgetauscht werden.

Aus EP 1 995 205 A1 ist ein Hubwerk mit einem einphasigen Motor bekannt geworden, bei welchem als Schalter ein Halbleiterrelais zum Einsatz kommt. Solche Relais werden auch als Solid State Relais (SSR) bezeichnet. Diese werden auch bei häufigem Schalten grundsätzlich weniger beschädigt als Fliehkraftschalter und weisen deshalb bei ihrer Verwendung in einem Einphasenhubwerk eine längere Lebensdauer auf, wodurch solche Einphasenhubwerke an sich länger funktionstüchtig bleiben.

Allerdings ist es so, dass auch solche Relais bei höheren Leistungen des Hubwerks Beschädigungen erleiden können.

### Darstellung der Erfindung

Hier will die Erfindung Abhilfe schaffen. Der Erfindung, wie sie in den Ansprüchen gekennzeichnet ist, liegt die Aufgabe zugrunde, bei einem Einphasen-Hubwerk der eingangs genannten Art eine Schaltung vorzuschlagen, welche zu einer höheren Funktions- und Betriebssicherheit des Systems führt.

Zu diesem Zweck wird grundsätzlich von einer nach dem Stand der Technik beschaffenen Schaltung, also unter Einbezug eines Halbleiterrelais, ausgegangen, bei welcher Schaltung der Anlaufkondensator neu mit einem Betriebskondensator in Wirkverbindung steht, wobei beide wiederum in Wirkverbindung mit der Hilfswicklung des Motors stehen.

Die Spannung des Betriebskondensators erzeugt dabei jene Phasenverschiebung, welche für die spannungsneutralen Schaltungen des Anlaufkondensators sorgt. Die zur Schaltung gehörende Steuerung steht mit einem Mikrokontroller in Wirkverbindung, wobei die Interdependenz der beiden genannten Elemente nach festgelegten Kriterien dafür sorgt, dass jene Synchronisationspunkte im Spannungsverlauf festlegt und angesteuert werden, über welche die Zu- und Abschaltungen des Anlaufkondensators über die Betriebsdauer laststromneutral erfolgen können.

Aus US 2007/0057647 geht eine Vorrichtung zur Steuerung eines Einphasen-Induktionsmotor hervor, mit einer Hauptwicklung, einer Hilfsstartwicklung, einem mit der Startwicklung in Serie geschalteten Kondensator. Die Vorrichtung umfasst eine Erfassungseinrichtung zum Erfassen der Spannung des Induktionsmotors über die Hauptwicklung und Hilfswicklung. Aus Fig. 2 und 3 dieser Druckschrift geht dann hervor, dass die Umschaltungen in Abhängigkeit der Motordrehzahl durchgeführt werden. Des Weiteren geht aus Fig. 6 dieser Druckschrift hervor, dass eine Ermittlung der Phasenwinkel der Spannungen von Hauptwicklung und Hilfswicklung durch-geführt wird.

Die Steuerung ist erfindungsgemäss so beschaffen, dass sie innerhalb des Spannungsfelds zeitabhängig eine Spannungssynchronisation zwischen Zu- und Abschaltung des Anlaufkondensators bewerkstelligt, d.h., dass die Abschaltung entlang der Spannungsverlaufskurve vorzugsweise beim Durchstich der Abszisse erfolgt, und die Einschaltung dann bedarfsmässig phasenverschoben von dieser neutralen Zone aus erfolgt. Diese Determinierung sorgt also dafür, dass die Schaltungen immer spannungsneutral erfolgen können.

Der wesentliche Vorteil der Erfindung ist hier darin zu sehen, dass die Schaltung eine maximierte Verminderung der Netztransienten gewährleistet, und mithin erreicht wird, dass die hochbeanspruchten Elemente des ganzen Hubwerks intensiver geschützt werden können, womit die Lebensdauer des ganzen Systems wesentlich verlängert werden kann.

Zum anderen weist hier der zum Einsatz gelangende Elektromotor eine Haupt- und eine Hilfswicklung auf, welche ebenfalls mit der genannten Steuerung in Wirkverbindung stehen, wobei diese Steuerung aus elektrischen und/oder elektronischen Bauelementen besteht.

Wesentlich für die erfindungsgemässe Schaltung ist also die Tatsache, dass die Hilfswicklung des Elektromotors zusätzlich mit dem genannten Betriebskondensator beschaltet ist. Grundsätzlich sind Anlaufkondensator und Betriebkondensator parallel geschaltet. Gegenüber mindestens einer Anschlussklemme der Hilfswicklung stehen die beiden Kondensatoren zudem in Wirkverbindung zueinander.

Somit wird die erfindungsgemässe Schaltung mit einem Betriebskondensator erweitert, welcher jene Voraussetzungen schafft, dass die gezielte Ansteuerung der festgelegten Synchronisationspunkte im Spannungsverlauf zustande kommt, wobei diese Synchronisationspunkte eine sichere laststromneutrale Zu- und Abschaltung des Anlaufkondensators gewährleisten.

Der weitere wesentliche Vorteil der Erfindung ist dann darin zu sehen, dass durch die Festlegung und Ansteuerung dieser Synchronisationspunkte bei jeder Zu- und Abschaltung des Anlaufkondensators jene nachhaltige Betriebssicherheit erreicht werden kann, welche nach dem den bekanntgewordenen Schaltungen von Hubwerken nicht zu erzielen ist.

Wesentlich ist also bei diesen Schaltungen auch die Interdependenz des Mikrokontrollers mit dem Betriebskondensator, insoweit, als nur jene Synchronisationspunkte bestimmt werden, welche eine Zu- und Abschaltung des Anlaufkondensators unter laststromneutralen Kriterien ermöglicht.

Zusätzliche Vorteile ergeben sich daraus, dass der Anlaufkondensator ohne weiteres mit dem oben bereits genannten Halbleiterrelais in Wirkverbindung stehen kann, womit dessen Vorteile beim Betrieb mit grossen Strömen ebenfalls zur Verfügung stehen.

Erfindungsgemäss ist die folgende grundlegende Schaltung zugrunde gelegt:
- Über die Hauptwicklung ist kein Kondensator geschaltet.
- Beide Kondensatoren, also Anlaufkondensator und Betriebskondensator, stehen zueinander in Wirkverbindung mit der Hilfswicklung.
- Bei der Zuschaltung wird der Anlaufkondensator dem Betriebskondensator in einem bestimmten Phasenwinkel parallel dazugeschaltet.
- Nach der erfolgten Zuschaltung wird der Anlaufkondensator im gleichen Phasenwinkel abgeschaltet.
- Bei der nächsten Zuschaltung wird der Anlaufkondensator im gleichen Phasenwinkel dem Betriebskondensator wieder parallel zugeschaltet.
- Der Mikrokontroller (uc), der den Zu- und Abschaltungsvorgangs des Anlaufkondensators bestimmt, synchronisiert auf den Phasengang des Betriebskondensators.

Aufgabengemässe vorteilhafte Ausführungen der Erfindung sind in den weiteren abhängigen Ansprüchen gekennzeichnet.

### Kurze Erläuterung der Figur

Im Folgenden wird anhand der einzigen Figur ein Ausführungsbeispiel der Erfindung näher erläutert. Alle für das unmittelbare Verständnis der Erfindung nicht erforderlichen Elemente sind weggelassen worden. Es zeigt.

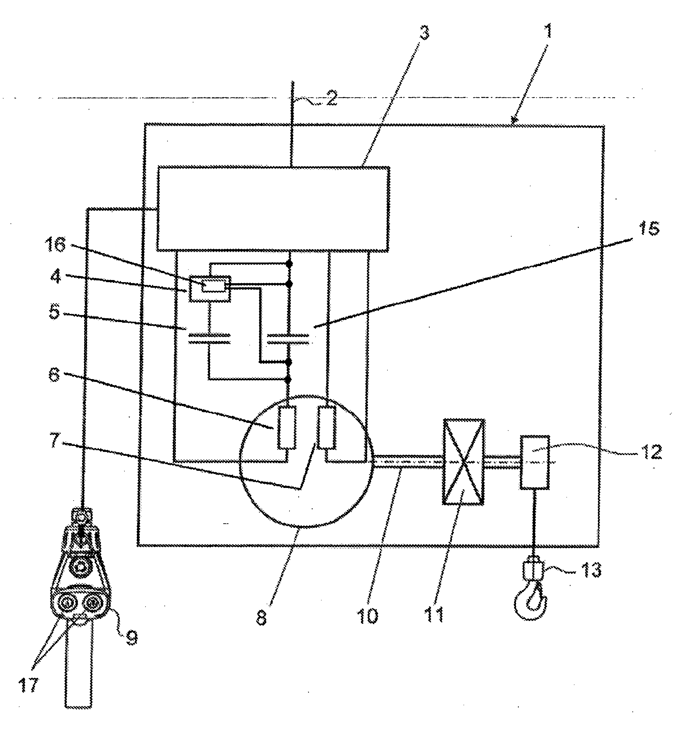

Fig. 1 die Schaltung eines Hubwerks mit einem einphasigen Elektromotor.

### Wege zur Ausführung der Erfindung

Das gemäss der einzigen Figur als Schema gezeigte Einphasenhubwerk 1, besteht aus einem Elektromotor 8, der ein einphasiger Hubmotor ist. Dieser weist eine Antriebswelle 10 auf, die über ein Getriebe 11 einen Kettentrieb 12 antreibt. Mit dem Kettentrieb 12 kann ein Lasthaken 13 mit einer hier nicht näher gezeigten Last angehoben und gesenkt werden. Das Einphasenhubwerk 1 ist zur Stromversorgung in üblicher Weise an eine Netzleitung 2 angeschlossen.

Zur Steuerung des Elektromotors 8 ist im genannten Gehäuse zudem eine Steuerung 3 angeordnet, die mit einem Steuerschalter 9 verbunden ist. Solche Steuerschalter 9 sind an sich bekannt und ermöglichen eine Handsteuerung durch Betätigen von zwei oder mehr Tasten 17. Beim Betätigen der einen der Tasten 17 wird der Lasthaken 13 angehoben und im anderen Fall abgesenkt. Das genannte Getriebe 11 ist in einem nicht näher dargestellten Getriebekasten untergebracht.

Der Elektromotor 8 weist eine Hilfswicklung 6 und eine Hauptwicklung 7 auf, welche mit der Steuerung 3 geschaltet sind. Die Hauptwicklung 7 wird zwar elementenfrei geführt, ist aber gegenüber der Steuerung 3 in einem geschlossenen Kreislauf geschaltet, wie dies aus der Figur ersichtlich ist. Die Hilfswicklung 6 ist nach einer Anschlussklemme mit einem Anlaufkondensator 5 und mit einem Betriebskondensator beschaltet. Mit dem Betriebkondensator 15 ist der Anlaufkondensator 5 parallel geschaltet. Gegenüber der Hilfswicklung stehen die beiden Kondensatoren zudem in Wirkverbindung zueinander, wie dies aus dem Schema hervorgeht.

Sowohl Anlaufkondensator 6 als auch Betriebskondensator 7 sind hier mit einem Relais 4 geschaltet, das eine redundante Absicherung bei Schaltungen unter grossem Strom bietet.

Zusätzlich weist die Schaltung einen Mikrokontroller 16 bekannter Bausweise auf, welcher in Wirkverbindung mit der Steuerung steht. Dieser Mikrokontroller 16 stellt sicher, dass die Synchronisationspunkte auf Grund der durch den Betriebskondensator ausgelösten Spannungsverschiebung zu Gunsten einer laststromneutrale Zu- und Abschaltung des Anlaufkondensators entlang des Spannungsverlaufs immer angesteuert werden können. Durch die Erzielung dieser Spannungsneutralität bei der Zu-und Abschaltung des Anlaufkondensators 5 wird jene Betriebssicherheit gewährleistet, welche nach Stand der Technik nicht zu erreichen war.

Die Hilfswicklung 6 ist, wie bereits erwähnt, mit dem Anlaufkondensator 5 beschaltet, wobei dieser Anlaufkondensator 5 nunmehr mit einem Betriebskondensator 15 parallel geschaltet ist. Der Betriebskondensator 15 ist in der Lage, eine Phasenverschiebung zu erzeugen, wobei dann durch die Steuerung 3 jene Synchronisationspunkte im Spannungsverlauf festgelegt werden, welche dafür sorgen, dass eine Zu-und Abschaltung des Anlaufkondensators 5 immer laststromneutral vonstatten geht.

Innerhalb der Hilfswicklung 6 sind im Strang des Anlaufkondensators 5 das Relais 4 und der Mikrokontroller 16 angeordnet. Der schaltungsmässige Abgang von den beiden letztgenannten Elementen geht vor der Steuerung 3 in den Strang des Betriebskondensators 15 über, so dass auch die Hilfswicklung 6 gegenüber der Steuerung 3 in einem geschlossenen Kreislauf operiert, wie dies aus der Figur ebenfalls ersichtlich ist.

Somit weisen Anlaufkondensator (5), Relais (4) und Betriebskondensator (15) eine schaltungstechnische Interdependenz gegenüber dem Elektromotor (8) auf, und stehen zudem über den Mikrokontroller (16) in Wirkverbindung mit der Steuerung (3), so dass der Elektromotor (8) nunmehr maximiert abgesichert ist.

Damit werden die folgenden grundlegenden schaltungstechnischen Vorgänge erfasst: Zunächst ist vorgegeben, dass über die Hauptwicklung (7) kein Kondensator beschaltet ist. Die Kondensatoren, also Anlaufkondensator (5) und Betriebskondensator (15) sind parallel zueinander geschaltet, wobei die beiden Kondensatoren mit der Hilfswicklung (6) in Wirkverbindung stehen, und bei der Zuschaltung wird der Anlaufkondensator (5) dem Betriebskondensator (15) in einem bestimmten Phasenwinkel parallel dazugeschaltet. Nach der erfolgten Zuschaltung wird der Anlaufkondensator (5) im gleichen Phasenwinkel abgeschaltet. Beim nächsten Zuschaltungsvorgang wird der Anlaufkondensator (5) im gleichen Phasenwinkel dem Betriebskondensator (15) wieder parallel zugeschaltet. Schliesslich synchronisiert der Mikrokontroller (16), der den Zu- und Abschaltungsvorgang des Anlaufkondensators (5) sicherstellt, auf den Phasengang des Betriebskondensators (15).

## Patentansprüche

1. Schaltung zum Betrieb eines Hubwerks, das im Wesentlichen aus einem aus Haupt- und Hilfswicklung bestehenden Elektromotor besteht, wobei die Haupt- und Hilfswicklung mit einer Steuerung in Wirkverbindung stehen, und wobei die Hilfswicklung mit einem Anlaufkondensator beschaltet ist, wobei der Anlaufkondensator (5) mit einem Betriebskondensator (15) in Wirkverbindung steht, so dass der Betriebskondensator (15) eine Phasenverschiebung erzeugt, und durch die Steuerung (3) jene Synchronisationspunkte im Spannungsverlauf festgelegt werden, über welche eine Zu- und Abschaltung des Anlaufkondensators (5) betreibbar ist, **dadurch gekennzeichnet dass** Anlaufkondensator (5) und Betriebskondensator (15) parallel und über die Hilfswicklung (6) mit mindestens einem Mikrokontroller (16) geschaltet sind, und dass der Mikrokontroller (16) in Wirkverbindung mit der Steuerung (3) auf den Phasengang des Betriebskondensators (15) die laststromneutralen Synchronisationspunkte des Anlaufkondensators (5) für die Zu- und Abschaltung synchronisiert und sicherstellt.

2. Schaltung nach Anspruch 1, **dadurch gekennzeichnet, dass**
a) Anlaufkondensator (5) und Betriebskondensator (15) in Wirkverbindung mit der Hilfswicklung (6) stehen;
b) beim Zuschaltungsvorgang der Anlaufkondensator (5) dem Betriebskondensator (15) in einem bestimmten Phasenwinkel parallel dazugeschaltet wird;
c) nach dem erfolgten Zuschaltungsvorgang der Anlaufkondensator (5) im gleichen Phasenwinkel abgeschaltet wird;
d) bei einem nächsten Zuschaltungsvorgang der Anlaufkondensator (5) im gleichen Phasenwinkel dem Betriebskoridensator (15) wieder parallel zugeschaltet wird;
e) ein Mikrokontroller (16) für den Zu- und Abschaltung des Anlaufkondensators (5) auf den Phasengang des Betriebskondensators (15) synchronisiert.

3. Schaltung nach Anspruch 1, **dadurch gekennzeichnet, dass** der Mikrokontroller (16) in Wirkverbindung mit einem Relais (4) steht.

4. Schaltung nach einem oder mehreren der Ansprüche 1 bis 3, **dadurch gekennzeichnet, dass** der Anlaufkondensator (5) mit dem Relais (4) gekoppelt ist, und dass das Relais (4) beim Erreichen einer bestimmten Drehzahl des Elektromotors (8) abschaltet.

5. Schaltung nach Anspruch 4, **dadurch gekennzeichnet, dass** das Relais (4) ein Halbleiterrelais ist.

## Claims

1. A switching arrangement for operating a hoisting gear, which essentially consists of an electric motor comprising a main and an auxiliary winding, the main and auxiliary windings being operatively connected to a controller, and the auxiliary winding being wired to a starting capacitor, in which case the starting capacitor (5) is operatively connected to a running capacitor (15) so that the running capacitor (15) generates a phase shift and the controller (3) determines those synchronization points in the voltage curve via which switching on and off of the starting capacitor (5) can proceed, **characterized in that** starting capacitor (5) and running capacitor (15) are connected in parallel and are connected via the auxiliary winding (6) to at least one microcontroller (16), and **in that** the microcontroller (16), operatively connected to the controller (3), synchronizes to the phase-frequency characteristic of the running capacitor (15) and ensures the load-current-neutral synchronization points of the starting capacitor (5) for switching on and off.

2. A switching arrangement according to Claim 1, **characterized in that**
a) starting capacitor (5) and running capacitor (15) are operatively connected to the auxiliary winding (6);
b) with the switching-on process, the starting capacitor (5) is connected in parallel to the running capacitor (15) at a specific phase angle;
c) after the switching-on process has taken place, the starting capacitor (5) is switched off at the same phase angle;
d) with the next switching-on process, the starting capacitor (5) is again connected in parallel to the running capacitor (15) at the same phase angle;
e) a microcontroller (16) for switching the starting capacitor (5) on and off synchronizes to the phase-frequency characteristic of the running capacitor (15).

3. A switching arrangement according to Claim 1, **characterized in that** the microcontroller (16) is operatively connected to a relay (4).

4. A switching arrangement according to one or more of Claims 1 to 3, **characterized in that** the starting capacitor (5) is connected to the relay (4), and **in that** the relay (4) switches off when a specific speed of the electric motor (8) has been reached.

5. A switching arrangement according to Claim 4, **characterized in that** the relay (4) is a semiconductor relay.

## Revendications

1. Circuit pour faire fonctionner un dispositif de levage qui se compose essentiellement d'un moteur électrique composé d'un enroulement principal et d'un enroulement auxiliaire, les enroulements principal et auxiliaire étant en liaison fonctionnelle avec une commande, l'enroulement auxiliaire étant câblé avec un condensateur de démarrage, lequel condensateur de démarrage (5) est en liaison fonctionnelle avec un condensateur de service (15) de telle façon que le condensateur de service (15) génère un déphasage, et la commande (3) définissant sur la courbe de tension des points de synchronisation par lesquels une connexion et une déconnexion du condensateur de démarrage (5) peuvent être effectuées, **caractérisé en ce que** condensateur de démarrage (5) et condensateur de service (15) sont câblés en parallèle et, via l'enroulement auxiliaire (6), avec au moins un microcontrôleur (16) et que le microcontrôleur (16), en liaison fonctionnelle avec la commande (3), synchronise et assure les points de synchronisation neutres du point de vue du courant de charge du condensateur de démarrage (5) sur la réponse en phase du condensateur de service (15) pour la connexion et la déconnexion.

2. Circuit selon la revendication 1, **caractérisé en ce que**
a) condensateur de démarrage (5) et condensateur de service (15) sont en liaison fonctionnelle avec l'enroulement auxiliaire (6) ;
b) lors du processus de connexion, le condensateur de démarrage (5) est connecté en parallèle avec le condensateur de service (15) à un angle de phase défini ;
c) après le processus de connexion, le condensateur de démarrage (5) est déconnecté au même angle de phase ;
d) lors d'un processus de connexion suivant, le condensateur de démarrage (5) est de nouveau connecté en parallèle avec le condensateur de service (15) au même angle de phase ;
e) un microcontrôleur (16) pour la connexion et la déconnexion du condensateur de démarrage (5) se synchronise sur la réponse en phase du condensateur de service (15).

3. Circuit selon la revendication 1, **caractérisé en ce que** le microcontrôleur (16) est en liaison fonctionnelle avec un relais (4).

4. Circuit selon une ou plusieurs des revendications 1 à 3, **caractérisé en ce que** le condensateur de démarrage (5) est couplé au relais (4), et que le relais (4) est déconnecté lorsqu'une vitesse de rotation définie du moteur électrique (8) est atteinte.

5. Circuit selon la revendication 4, **caractérisé en ce que** le relais (4) est un relais à semi-conducteurs.
